# EUROPÄISCHE PATENTSCHRIFT

(11) **EP 2 664 971 B1**
(45) Veröffentlichungstag und Bekanntmachung des Hinweises auf die Patenterteilung: **17.09.2014**
(21) Anmeldenummer: 12168253.8
(22) Anmeldetag: 16.05.2012
(51) Int. Cl.: G05B 19/042, G06F 3/041

(54) **Touchscreen mit analoger Druckerfassung als Bedienerschnittstelle für industrielle technische Einrichtung**
Touch-screen with analogue pressure sensor for an industrial technical equipment
Écran tactile avec détection de pression analogique pour une installation technique industrielle

(43) Veröffentlichungstag der Anmeldung: 20.11.2013
(60) Teilanmeldung: 14001975.3
(73) Patentinhaber: Siemens Aktiengesellschaft, 80333 München (DE)
(72) Erfinder: Hauf, Ronald, 91096 Möhrendorf (DE)

(56) Entgegenhaltungen:
- US-A1- 2007 024 595
- US-A1- 2010 123 686
- US-A1- 2011 141 052

## Beschreibung

Die vorliegende Erfindung betrifft ein Betriebsverfahren für eine industrielle technische Einrichtung,
- wobei von einem Bediener der industriellen technischen Einrichtung auf einen Bereich eines Touchscreens ein Druck ausgeübt wird,
- wobei mittels einer dem Bereich zugeordneten Sensoreinrichtung ein von dem ausgeübten Druck abhängiger Wert generiert wird,
- wobei der generierte Wert einer Auswertungseinrichtung zugeführt wird,
- wobei in einem Normalbetrieb von der Auswertungseinrichtung eine vom ausgeübten Druck abhängige Größe an eine Steuereinrichtung der industriellen technischen Einrichtung übermittelt wird.

Die vorliegende Erfindung betrifft weiterhin eine industrielle technische Einrichtung,
- wobei die industrielle technische Einrichtung eine Bedienerschnittstelle und eine Steuereinrichtung aufweist,
- wobei die Bedienerschnittstelle einen Touchscreen aufweist, der mindestens einen Bereich aufweist, auf den von einem Bediener der industriellen technischen Einrichtung ein Druck ausgeübt wird,
- wobei dem Bereich eine Sensoreinrichtung zugeordnet ist, mittels derer ein vom ausgeübten Druck abhängiger Wert generiert wird,
- wobei die Bedienerschnittstelle eine Auswertungseinrichtung aufweist, mit der die Sensoreinrichtung zur Übermittlung des von ihr generierten Wertes verbunden ist,
- wobei die Auswertungseinrichtung eine Schnittstelle zur Steuereinrichtung aufweist, über die eine vom ausgeübten Druck abhängige Größe an die Steuereinrichtung übermittelt wird.
- wobei die Steuereinrichtung eine Schnittstelle zur Auswertungseinrichtung zum Entgegennehmen einer ihr von der Auswertungseinrichtung übermittelten Größe aufweist.

Der generierte Wert ist also ein Maß für den ausgeübten Druck. Der Wert soll also eine stetige und monotone Funktion des ausgeübten Druckes sein. Beispielsweise kann eine lineare, exponentielle oder logarithmische Beziehung bestehen. In analoger Weise ist auch die an die Steuereinrichtung übermittelte Größe von dem ausgeübten Druck abhängig.

Zur Bedienung von Maschinen werden im Stand der Technik an Bedienpaneelen, mobilen Bedienpaneelen und Maschinenkontrollpaneelen in der Regel Hardkeys und Softkeys eingesetzt. Derartigen Tasten ist immer nur eine Funktion zugeordnet, die durch Drücken der entsprechenden Taste aktiviert und durch Loslassen der entsprechenden Taste deaktiviert wird. Bei Hardkeys ist die Funktion stets dieselbe. Bei Softkeys wird den Tasten in Abhängigkeit vom Gesamtzustand der industriellen technischen Einrichtung eine jeweilige Funktion zugewiesen.

Im Stand der Technik ist weiterhin bekannt, als Bedienerschnittstelle einen Touchscreen zu verwenden. Bei Touchscreens kann das Berühren des Touchscreens erkannt und dementsprechend reagiert werden. Einzelnen Bereichen des Touchscreens kann - analog zu Softkeys - eine variable Funktion zugeordnet werden.

Aufgrund des Umstands, dass Hard- und Softkeys im Wesentlichen binäre Funktionen zugeordnet sind, muss im Stand der Technik beim Bewegen von Achsen oder Spindeln an Maschinen in der Regel die jeweils zu verfahrende Achse durch Betätigen einer Taste aktiviert werden. Die zugehörige Verfahrgeschwindigkeit oder Drehzahl wird über einen separaten elektromechanischen Drehschalter (override) eingestellt. Im Stand der Technik ist in der Regel somit eine Zweihandbedienung erforderlich, die insbesondere beim Arbeiten mit einem mobilen Paneel keinen ergonomisch günstigen Bedienablauf zulässt. Alternativ können die Bedienhandlungen sequentiell durchgeführt werden. Auch diese Vorgehensweise ist jedoch ergonomisch ungünstig. Bedienerschnittstellen, bei denen mittels einer einzigen Taste sowohl die Anwahl der zu verfahrenden Achse bzw. des anzusteuernden Antriebs als auch dessen Sollwert vorgegeben werden kann, sind im Stand der Technik nicht bekannt.

In jüngerer Zeit sind analog-resistive Sensoren bekannt geworden, die für Touchscreens geeignet sind und die den auf sie ausgeübten Druck analog oder quasianalog hochauflösend erfassen können. Rein beispielhaft wird auf entsprechende Produkte der Firma Peratech, England - insbesondere das Produkt "QTC Clear" - und auf sogenannte piezoelektrische Funktionspolymere verwiesen. Mittels beider Systeme kann der Druck auf den Touchscreen analog und hochauflösend erfasst werden.

Aus der US 2010/123 686 A1 ist eine Einrichtung der Kommunikationstechnik bekannt, die einen drucksensitiven Touchscreen aufweist, wobei mittels des Touchscreens nicht nur ein Berühren als solches, sondern auch der hierbei ausgeübte Druck quantitativ erfassbar ist. In Abhängigkeit von dem erfassten Druck wird eine Reaktion ergriffen, beispielsweise mit einer druckabhängigen Geschwindigkeit in einer Liste geblättert oder druckabhängig eine von mehreren verschiedenen Reaktionen ergriffen. Beiläufig ist in der US 2010/123 686 A1 erwähnt, dass der Touchscreen bei einer industriellen Einrichtung, beispielsweise bei einer Steuereinrichtung, verwendet werden kann.

Aus der US 2007/024 595 A1 ist eine Einrichtung der Kommunikationstechnik bekannt, die einen drucksensitiven Touchscreen aufweist, wobei mittels des Touchscreens nicht nur ein Berühren als solches, sondern auch der hierbei ausgeübte Druck quantitativ erfassbar ist. In Abhängigkeit von dem erfassten Druck wird eine Reaktion ergriffen, beispielsweise mit einer druckabhängigen Geschwindigkeit in einer Liste geblättert.

Die Aufgabe der vorliegenden Erfindung besteht darin, Möglichkeiten zu schaffen, mittels derer auf einfache und zuverlässige Weise eine Einhandbedienung einer industriellen technischen Einrichtung möglich wird.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 11.

Erfindungsgemäß ist vorgesehen, ein Betriebsverfahren der eingangs genannten Art dadurch auszugestalten,
- dass die Steuereinrichtung ein Element der industriellen technischen Einrichtung aktiviert und einen von dem ausgeübten Druck abhängigen Sollwert an das Element ausgibt, wenn der durch die an die Steuereinrichtung übermittelte Größe definierte Druk einen ersten Schwellenwert übersteigt,
- dass der Sollwert eine monoton steigende Funktion des Druckes ist und
- dass der Sollwert den Wert Null aufweist, bis der Druck einen zweiten, oberhalb des ersten Schwellenwertes liegenden. Schwellenwert übersteigt

Der Sollwert nimmt einen Wert ungleich 0 somit nicht bereits dann an, wenn der entsprechende Bereich des Touchscreens berührt wird, sondern erst dann, wenn tatsächlich ein nennenswerter Druck auf den entsprechenden Bereich ausgeübt wird. Vorzugsweise liegt daher der erste Schwellenwert oberhalb des minimal erfassbaren Druckes. Weiterhin liegt vorzugsweise zwischen dem ersten und dem zweiten Schwellenwert mindestens ein weiteres, unterscheidbares Druckniveau. Der Sollwert als solcher kann insbesondere ein Kraft-, Drehzahl- oder Geschwindigkeitssollwert sein.

In einer besonders bevorzugten Ausgestaltung der vorliegenden Erfindung ist auch die Ableitung des Sollwertes nach dem Druck eine monoton steigende Funktion. Durch diese Ausgestaltung kann bei relativ geringen Drücken eine feinfühlige Dosierung der Ansteuerung des Antriebs erfolgen, während durch kräftiges Drücken schnell ein hoher Sollwert erreicht werden kann.

Es ist möglich, dass der Sollwert unabhängig vom Zustand der industriellen technischen Einrichtung ist. Vorzugsweise ist jedoch vorgesehen, dass der Sollwert zusätzlich eine Funktion eines Zustandes der industriellen technischen Einrichtung zum Zeitpunkt der Aktivierung des Elements ist.

Besonders bevorzugt ist, dass mittels eines dem Bereich zugeordneten Aktuators eine für den Sollwert spezifische taktile Ansteuerung des Bereichs erfolgt. Dadurch kann dem Bediener auch dann eine Rückkopplung über die von ihm bewirkte Reaktion erhalten, wenn er weder die industrielle technische Einrichtung als solche noch die Bedienerschnittstelle im Blickfeld hat.

Weiterhin ist möglich, dass die von dem ausgeübten Druck abhängige Reaktion die Aktivierung einer Anzahl von Elementen der industriellen technischen Einrichtung umfasst und dass die Anzahl von aktivierten Elementen eine monoton steigende Funktion des ausgeübten Druckes ist.

Vorzugsweise ist vorgesehen,
- dass der von dem ausgeübten Druck abhängige Wert von der Sensoreinrichtung auf fehlersichere Weise generiert wird,
- dass der von dem ausgeübten Druck abhängige Wert der Auswertungseinrichtung auf fehlersichere Weise zugeführt wird,
- dass die von dem ausgeübten Druck abhängige Größe von der Auswertungseinrichtung auf fehlersichere Weise ermittelt und an die Steuereinrichtung übermittelt wird und
- dass die von dem ausgeübten Druck abhängige Reaktion von der Steuereinrichtung auf fehlersichere Weise ermittelt und ausgeführt wird.

Durch diese Vorgehensweise kann im Prinzip ein fehlersicherer Betrieb der industriellen technischen Einrichtung erreicht werden. Vom Ansatz her muss, um einen fehlersicheren Betrieb zu gewährleisten, auch auf fehlersichere Weise erfasst werden, ob auf den entsprechenden Bereich des Touchscreens ein Druck ausgeübt wird. Im optimalen Fall ist daher vorgesehen, dass auch der ausgeübte Druck von der Sensoreinrichtung auf fehlersichere Weise erfasst wird. Alternativ ist es jedoch ausreichend, wenn der ausgeübte Druck, also der analoge Wert, nur auf nicht fehlersichere Weise erfasst wird und zusätzlich über einen weiteren Kanal das (binäre) Drücken des entsprechenden Bereichs erfasst wird.

Vorzugsweise ist weiterhin vorgesehen,
- dass durch das Beenden der Druckausübung ein Timer gestartet wird, der eine vorbestimmte Ablaufzeit aufweist,
- dass in dem Fall, dass von dem Bediener vor Erreichen der Ablaufzeit auf den Bereich des Touchscreens oder auf einen anderen Bereich des Touchscreens erneut ein Druck ausgeübt wird, der Timer zurückgesetzt wird,
- dass in dem Fall, dass von dem Bediener bis zum Erreichen der Ablaufzeit weder auf den Bereich des Touchscreens noch auf einen anderen Bereich des Touchscreens erneut ein Druck ausgeübt wird, in einen Sonderbetrieb übergegangen wird, und
- dass in dem Fall, dass von dem Bediener im Sonderbetrieb auf den Bereich des Touchscreens oder auf einen anderen Bereich des Touchscreens erneut ein Druck ausgeübt wird, von der Steuereinrichtung nicht die Reaktion des Normalbetriebs ermittelt und ausgeführt wird.

Durch diese Vorgehensweise kann gewährleistet werden, dass zum einen nicht durch ein versehentliches erstmaliges Berühren bereits eine Bedienaktion ausgelöst wird und zum anderen eine Bedienaktion auch dann nicht ausgelöst wird, wenn beispielsweise ein Fremdkörper auf den Touchscreen gerät oder die Bedienerschnittstelle (im Falle einer mobilen Bedienerschnittstelle) auf den Boden fällt oder dergleichen.

Selbstverständlich muss es möglich sein, den Sonderbetrieb wieder zu verlassen. Es wird also im Sonderbetrieb geprüft, ob der Bediener einen Umschaltbefehl vorgibt. Bei Vorgabe des Umschaltbefehls wird vom Sonderbetrieb in den Normalbetrieb übergegangen. Erfindungsgemäß ist der Umschaltbefehl jedoch eine von einer einmaligen Druckausübung auf einen einzelnen Bereich des Touchscreens verschiedene Bedienhandlung des Bedieners. Beispielsweise kann der Umschaltbefehl ein längeres Betätigen einer separaten Taste oder mehrerer separater Tasten oder das simultane Betätigen einerseits einer Taste und andererseits des Drückens eines bestimmten Bereichs des Touchscreens sein. Auch ist es möglich, dass der Umschaltbefehl durch eine vorbestimmte Eingabesequenz festgelegt ist.

Die Aufgabe wird weiterhin durch eine industrielle technische Einrichtung mit den Merkmalen des Anspruchs 12 gelöst. Vorteilhafte Ausgestaltungen der industriellen technischen Einrichtung sind Gegenstand der abhängigen Ansprüche 13 bis 18.

Die Ausgestaltungen der industriellen technischen Einrichtung korrespondieren teilweise mit denen des erfindungsgemäßen Betriebsverfahrens. Bezüglich dieser Ausgestaltungen wird auf die obigen Ausführungen zum erfindungsgemäßen Betriebsverfahren verwiesen. Nachstehend wird auf die zusätzlichen erfindungsgemäßen Ausgestaltungen eingegangen.

Vorzugsweise ist die Bedienerschnittstelle als mobile Bedienerschnittstelle ausgebildet. Insbesondere bei einer mobilen Bedienerschnittstelle kann der Bediener unter Umständen eine Hand zum Halten der Bedienerschnittstelle benötigen, so dass von vorneherein nur eine Einhandbedienung möglich ist.

Der Touchscreen ist auf einer Oberseite der Bedienerschnittstelle angeordnet. Vorzugsweise weist die Bedienerschnittstelle - beispielsweise an ihrer Unterseite - einen Haltegriff auf. Dadurch ist ein bequemes und einfaches Halten der Bedienerschnittstelle durch den Bediener möglich.

In einer besonders bevorzugten Ausgestaltung der Bedienerschnittstelle ist vorgesehen, dass der Haltegriff mindestens ein Betätigungselement aufweist, dass das Betätigungselement mit der Auswertungseinrichtung signaltechnisch verbunden ist und dass das Betätigen des Betätigungselements von der Auswertungseinrichtung zusätzlich zum Ausüben von Druck auf den Bereich des Touchscreens ausgewertet wird. Durch diese Ausgestaltung kann eine noch höhere Betriebssicherheit erreicht werden. Beispielsweise ist es möglich, dass das Aktivieren von Antrieben nur dann erfolgt, wenn zusätzlich das Betätigungselement betätigt ist. Auch ist es möglich, das Betätigungselement ähnlich einer beispielsweise im Eisenbahnwesen an sich bekannten Totmanntaste zu betreiben, dass es also regelmäßig betätigt werden muss. Auch andere Verwendungen sind möglich, beispielsweise eine Kopplung von Funktionen oder eine Funktionsselbsthaltung.

Die Schnittstelle zur Steuereinrichtung der industriellen technischen Einrichtung ist vorzugsweise als leitungslose Schnittstelle ausgebildet. Beispielsweise kann die Schnittstelle als Funkverbindung ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild einer industriellen technischen Einrichtung,
- FIG 2: eine Bedienerschnittstelle,
- FIG 3: eine funktionale Darstellung der Bedienerschnittstelle und einer Steuereinrichtung,
- FIG 4: ein Druckdiagramm,
- FIG 5 bis 7: Ablaufdiagramme,
- FIG 8 und 9: Druckdiagramme,
- FIG 10: ein Ablaufdiagramm,
- FIG 11: einen Schritt in einem Ablaufdiagramm,
- FIG 12: ein Ablaufdiagramm,
- FIG 13: eine mögliche Ausgestaltung einer Bedienerschnittstelle,
- FIG 14: die Unterseite der Bedienerschnittstelle von FIG 13 und
- FIG 15: ein Zeitdiagramm.

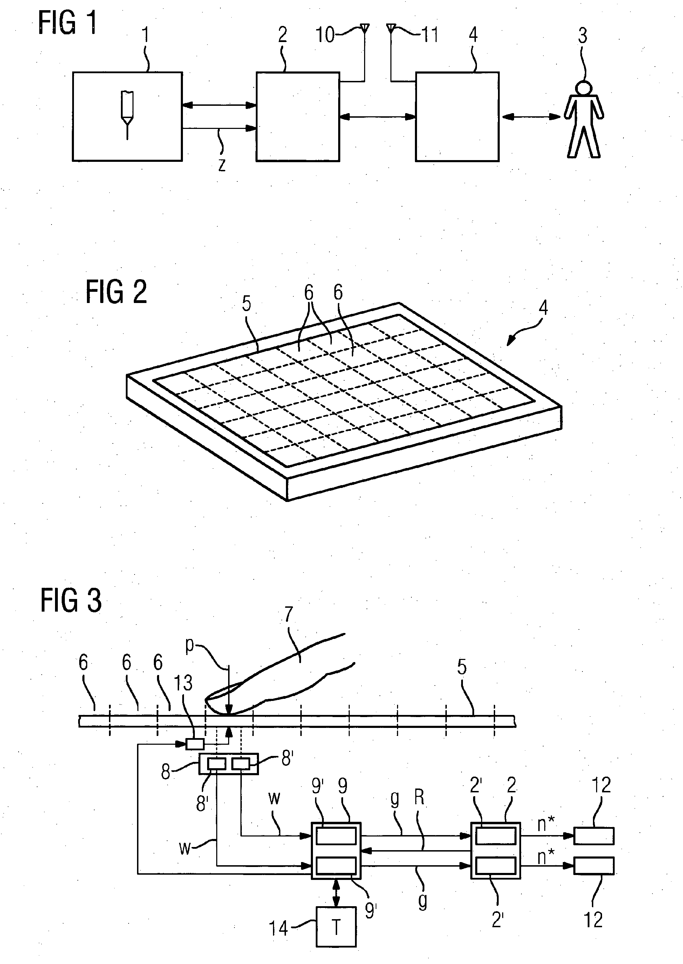

Gemäß FIG 1 wird eine industrielle technische Einrichtung 1 - rein beispielhaft ist zu diesem Zweck in FIG 1 eine Bohrmaschine dargestellt - mittels einer Steuereinrichtung 2 gesteuert. Die Steuereinrichtung 2 nimmt von einem Bediener 3 der industriellen technischen Einrichtung 1 über eine Bedienerschnittstelle 4 Eingaben entgegen, die er im Rahmen der Ansteuerung der industriellen technischen Einrichtung beabsichtigt. Weiterhin gibt die Steuereinrichtung 2 über die Bedienerschnittstelle 4 Ausgaben und Informationen an den Bediener 3 aus.

Die Bedienerschnittstelle 4 weist gemäß den FIG 2 und 3 einen Touchscreen 5 auf. Der Touchscreen 5 weist gemäß FIG 2 mindestens einen Bereich 6 auf, auf den von dem Bediener 3 ein Druck p ausgeübt werden kann. In der Regel sind viele derartiger Bereiche 6 vorhanden, wobei die Bereiche 6 in einer zweidimensionalen Matrix angeordnet sind. Beispielsweise können 100 x 100 Bereiche 6 oder noch mehr vorhanden sein. Die Bereiche 6 sind zu Gruppen zusammengefasst, wobei jede Gruppe einem Touchkey-Element entspricht.

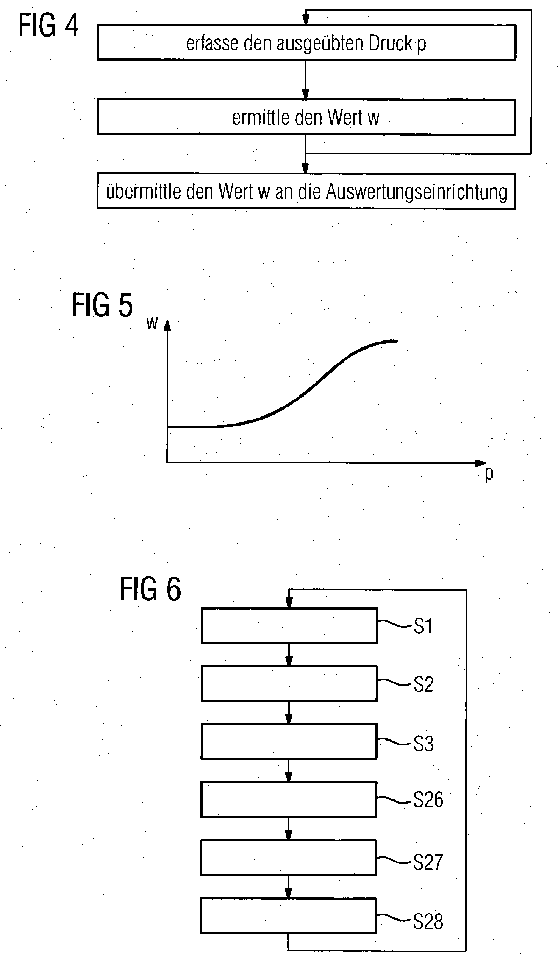

Wenn von dem Bediener 3 - beispielsweise mit einem seiner Finger 7 - der entsprechende Druck p ausgeübt wird, wird dies gemäß den FIG 3 und 4 mittels einer dem entsprechenden Bereich 6 zugeordneten Sensoreinrichtung 8 erfasst. Die Sensoreinrichtung 8 generiert gemäß FIG 4 aufgrund des ausgeübten Druckes p einen Wert w, der von dem Druck p abhängig ist, d. h. der ein Maß für die Größe des ausgeübten Druckes p ist. Der Wert w kann beispielsweise eine elektrische Spannung oder ein elektrischer Strom sein. Der Wert w kann gemäß FIG 5 linear oder nichtlinear von dem ausgeübten Druck p abhängen. Die Genauigkeit, mit welcher der Druck p erfasst wird, ist von untergeordneter Bedeutung. Beispielsweise können 5, 8, 10, 50, 100 usw. Druckniveaus unterscheidbar sein. Entscheidend ist, dass nicht nur zwischen den Zuständen "gedrückt" und "nicht gedrückt" unterschieden wird, sondern zusätzlich auch eine Information über die Größe des ausgeübten Druckes p zur Verfügung steht.

Die Sensoreinrichtung 8 führt den von ihr generierten, von dem ausgeübten Druck p abhängigen Wert w einer Auswertungseinrichtung 9 zu. Die Auswertungseinrichtung 9 ist Bestandteil der Bedienerschnittstelle 4. Die Auswertungseinrichtung 9 ist mit der Sensoreinrichtung 8 zur Übermittlung des entsprechenden Wertes w von der Sensoreinrichtung 8 an die Auswertungseinrichtung 9 verbunden. Die Auswertungseinrichtung 9 nimmt den von der Sensoreinrichtung 8 generierten Wert w gemäß den FIG 3 und 6 in einem Schritt S1 entgegen. Sie ermittelt anhand des entgegen genommenen Wertes w in einem Schritt S2 eine vom Druck p abhängige Größe g.

Die Art der ermittelten Größe g und deren Auflösung können - analog zu dem von dem ausgeübten Druck p abhängigen Wert w - nach Bedarf sein. Entscheidend ist, dass entsprechend der Darstellung in FIG 5 anhand der ermittelten Größe g nicht nur die Zustände "gedrückt" und "nicht gedrückt" unterschieden werden können, sondern - beispielsweise im Rahmen einer 8 bit Auflösung - auch eine Information über die Größe des ausgeübten Druckes p zur Verfügung steht. Im einfachsten Fall kann die Größe g mit dem Wert w identisch sein oder eine Digitalisierung des - meist analogen - Wertes w sein.

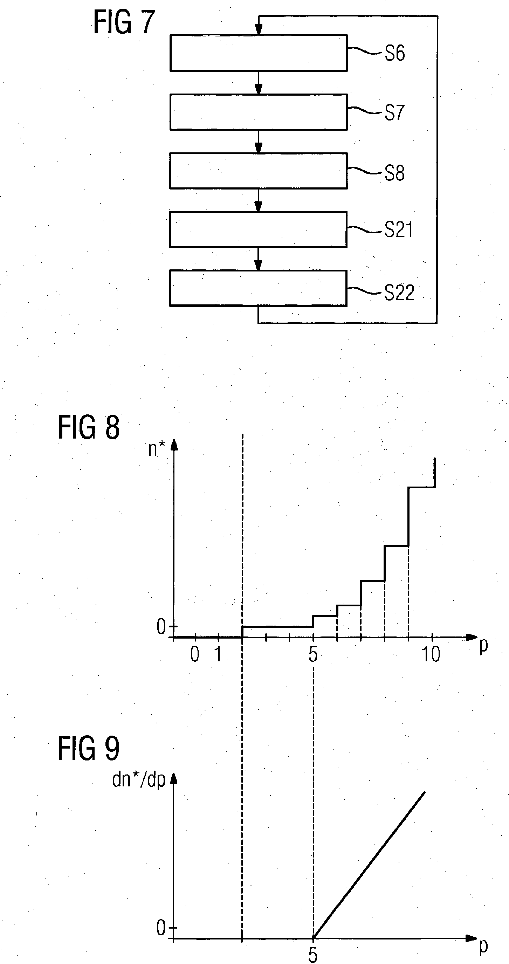

Die Auswertungseinrichtung 9 weist gemäß FIG 3 eine Schnittstelle 10 zur Steuereinrichtung 2 auf. Über die Schnittstelle 10 übermittelt die Auswertungseinrichtung 9 die von dem ausgeübten Druck p abhängige Größe g in einem Schritt S3 an die Steuereinrichtung 2. Die Steuereinrichtung 2 weist ebenfalls eine Schnittstelle 11 auf, die mit der Schnittstelle 10 der Auswertungseinrichtung 9 datentechnisch verbunden ist. Die Steuereinrichtung 2 nimmt gemäß den FIG 3 und 7 über ihre Schnittstelle 11 die von der Auswertungseinrichtung 9 über ihre Schnittstelle 10 ausgegebene, vom ausgeübten Druck p abhängige Größe g in einem Schritt S6 entgegen. Sie ermittelt anhand der an sie übermittelten Größe g in einem Schritt S7 eine Reaktion und führt die Reaktion in einem Schritt S8 aus. Aufgrund des Umstands, dass die übermittelte Größe g von dem ausgeübten Druck p abhängt, kann auch die ermittelte und ausgeführte Reaktion von dem ausgeübten Druck p abhängen.

Die von dem ausgeübten Druck p abhängige Reaktion kann verschiedener Natur sein. FIG 8 zeigt eine mögliche Reaktion. In FIG 8 wird angenommen, dass die von dem ausgeübten Druck p abhängige Größe g digital übermittelt wird, so dass der Druck p als gequantelte Größe zur Verfügung steht. Mit 0, 1, 2, 3 usw. sind in FIG 8 nach rechts die unterscheidbaren Druckniveaus bezeichnet. 0 entspricht keinem Druck, 1 entspricht dem kleinsten erfassbaren, von 0 verschiedenen Druck, die weiteren Werte repräsentieren in streng monoton steigender Folge weitere unterscheidbare Drücke.

Gemäß FIG 8 wird von der Steuereinrichtung 2 beim Drücken eines bestimmten Bereichs 6 des Touchscreens 5 - also bei Erkennen eines Druckes p oberhalb eines vorbestimmten ersten Schwellenwerts - ein dem entsprechenden Bereich 6 zumindest temporär zugeordnetes Element 12 der industriellen technischen Einrichtung 1 (siehe FIG 3) aktiviert. Der erste Schwellenwert kann gleich dem minimal erfassbaren Druck (Druckniveau 1) oder oberhalb davon liegen, beispielsweise entsprechend der Darstellung von FIG 8 beim Druckniveau 2. Weiterhin wird ein entsprechender Sollwert n* an das Element 12 ausgegeben. Gemäß FIG 8 ist der Sollwert n* eine monoton steigende Funktion des Druckes p. Das Element 12 kann beispielsweise ein Antrieb oder eine Presse sein.

Es ist möglich, den Sollwert n* sofort mit dem Aktivieren auf einen Wert größer 0 zu setzen. Vorzugsweise weist der Sollwert n* jedoch den Wert 0 auf, bis der ausgeübte Druck p einen zweiten Schwellenwert übersteigt. Zwischen dem ersten und dem zweiten Schwellenwert liegt in der Regel mindestens ein weiteres, unterscheidbares Druckniveau.

Die Art des Sollwertes n* kann nach Bedarf gewählt sein. Oftmals handelt es sich um einen Kraft-, Drehzahl- oder Geschwindigkeitssollwert.

Wie bereits aus FIG 8 erkennbar ist, steigt der Sollwert n* mit steigendem Druck p zunächst langsam an und steigt dann immer schneller an. Vorzugsweise ist daher entsprechend der Darstellung in FIG 9 nicht nur der Sollwert n* selbst, sondern auch die Ableitung dn*/dp des Sollwertes n* nach dem Druck p eine monoton steigende Funktion des Druckes p. Aus Gründen der einfacheren Darstellung wurde in FIG 9 die - in der Regel recht feine - Quantelung nicht mit dargestellt.

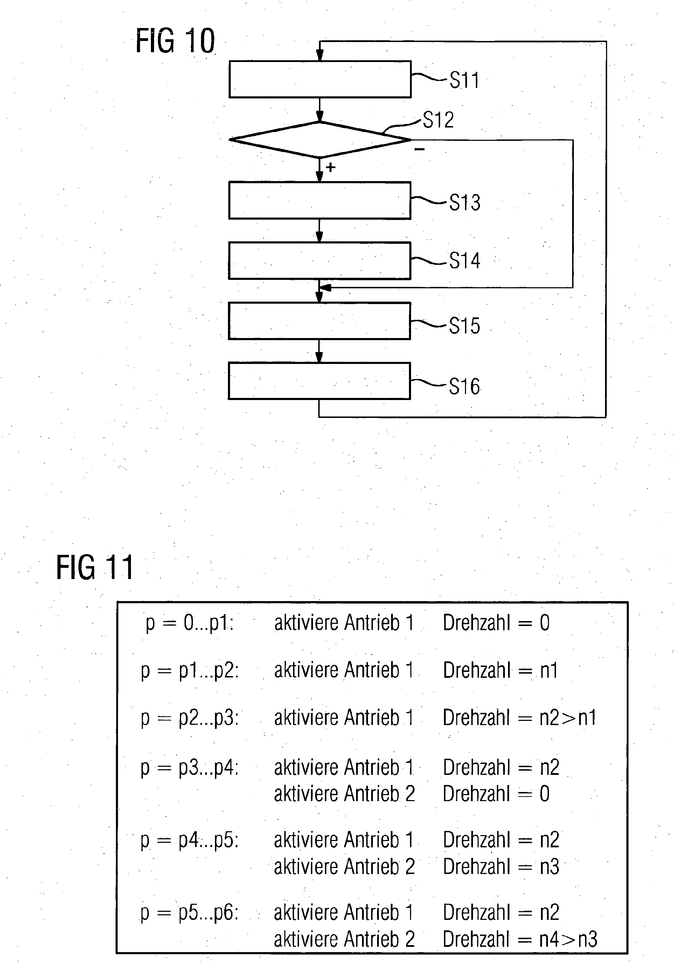

Es ist möglich, dass der Verlauf des Sollwerts n* als Funktion des Druckes p unabhängig von anderen Größen ist. Alternativ kann eine derartige Abhängigkeit bestehen. Insbesondere kann der Sollwert n* zusätzlich eine Funktion eines Zustands Z der industriellen technischen Einrichtung 1 zum Zeitpunkt der Aktivierung des Elements 12 sein. Dies wird nachstehend in Verbindung mit FIG 10 näher erläutert.

Gemäß FIG 10 nimmt die Steuereinrichtung 2 in einem Schritt S11 die von dem ausgeübten Druck p abhängige Größe g entgegen. Sie prüft in einem Schritt S12, ob der Druck p gemäß der zuvor übermittelten Größe g - also nicht der Druck p gemäß der jetzt aktuell übermittelten Größe g - unterhalb des ersten Schwellenwertes liegt. Wenn dies der Fall ist, erfasst die Steuereinrichtung 2 in einem Schritt S13 den aktuellen Zustand Z der industriellen technischen Einrichtung 1. Anhand des erfassten Zustandes Z ermittelt sie in einem Schritt S14 den funktionalen Verlauf des Sollwertes n* als Funktion des Druckes p. Beispielsweise kann die Steuereinrichtung 2 die in FIG 8 dargestellte Kurve mit einem Faktor skalieren, wobei der Faktor von dem erfassten Zustand Z abhängt.

In einer bevorzugten Ausgestaltung der vorliegenden Erfindung ermittelt die Steuereinrichtung 2 gemäß FIG 7 in einem Schritt S21 aufgrund der von ihr ermittelten und ausgeführten Reaktion eine Rückmeldung R und übermittelt die Rückmeldung R in einem Schritt S22 an die Auswertungseinrichtung 9. Die Auswertungseinrichtung 9 nimmt die Rückmeldung R gemäß FIG 6 in einem Schritt S26 entgegen. In einem Schritt S27 ermittelt die Auswertungseinrichtung 9 anhand der Rückmeldung R eine Ansteuerung für einen Aktuator 13, der dem Bereich 6 zugeordnet ist, auf den der Bediener 3 den Druck p ausübt. Die Auswertungseinrichtung 9 steuert den Aktuator 13 gemäß den FIG 3 und 6 in einem Schritt S28 entsprechend der ermittelten Ansteuerung an.

Der Aktuator 13 ist ein mikromechanischer Aktuator 13. Die Ansteuerung des Aktuators 13 erzeugt daher eine mechanische Wirkung auf den Bereich 6, die von dem Bediener 3 taktil erfassbar ist.

Alternativ oder zusätzlich zu einer Ansteuerung eines (ergänze: einzelnen) Elements 12 der industriellen technischen Einrichtung ist es möglich, dass die Steuereinrichtung 2 in Abhängigkeit von dem ausgeübten Druck p eine Anzahl von Elementen 12 aktiviert. In diesem Fall ist die Anzahl an aktivierten Elementen 12 eine monoton steigende Funktion des ausgeübten Druckes p. FIG 11 zeigt - rein beispielhaft - eine Ausgestaltung, bei welcher bei einem von p1 über p2, p3 usw. ansteigenden Druck p zunächst ein erster Antrieb 12 und dann ein zweiter Antrieb 12 aktiviert werden, wobei an die Antriebe 12 - beginnend mit 0 - nacheinander steigende Drehzahlsollwerte n1 bis n4 ausgegeben werden.

Ein Beispiel einer möglichen Anwendung mit der Ansteuerung mehrerer Antriebe 12 ist zum Beispiel, zunächst eine Bohrspindel zu aktivieren, sodann die Bohrspindel mit geringer Drehzahl n1 zu beaufschlagen, sodann die Bohrspindel mit hoher Drehzahl n2 zu beaufschlagen und erst danach die Bohrspindel zunächst langsam (n3) und später schneller (n4) entlang ihrer Rotationsachse abzusenken, so dass in ein Werkstück ein Loch gebohrt wird.

Das Aktivieren von Elementen 12 ist eine sicherheitsgerichtete Aktion. Versehentliche Fehlauslösungen aufgrund einer Fehlfunktion der Sensoreinrichtung 8, der Auswertungseinrichtung 9 usw. müssen daher vermieden werden. Der ausgeübte Druck p wird daher von der Sensoreinrichtung 8 vorzugsweise auf fehlersichere Weise erfasst. Beispielsweise kann die Sensoreinrichtung 8 gemäß FIG 3 zwei Sensoren 8' aufweisen, die unabhängig voneinander (und damit fehlersicher) den Druck p erfassen und den entsprechenden Wert w generieren und ihn der Auswertungseinrichtung 9 zuführen. Alternativ kann mittels einer weiteren, nicht dargestellten Sensoreinrichtung in rein binärer Weise das Drücken des entsprechenden Bereichs 6 des Touchscreens 5 erfasst werden.

Die Auswertungseinrichtung 9 selbst ist ebenfalls auf fehlersichere Weise ausgebildet. Beispielsweise kann sie aus zwei unabhängig voneinander arbeitenden Teileinrichtungen 9' bestehen, denen von je einem Sensor 8' der jeweilige Wert w zugeführt wird, die den ihnen zugeführten Wert w unabhängig voneinander auswerten und sich gegenseitig überwachen. Auch die Auswertungseinrichtung 9 wertet somit den an sie übermittelten Wert w auf fehlersichere Weise aus. Weiterhin wird auch die Größe g in fehlersicherer Weise ermittelt und an die Steuereinrichtung 2 übermittelt. Beispielsweise kann - analog zum Signalweg von der Sensoreinrichtung 8 zur Auswertungseinrichtung 9 - eine zweifache Übermittlung erfolgen.

Auch die Steuereinrichtung 2 ist in fehlersicherer Weise ausgebildet. Beispielsweise kann sie aus zwei unabhängig voneinander arbeitenden Teileinheiten 2' bestehen, die sich gegenseitig überwachen. Fehlersichere Steuereinrichtungen sind im Stand der Technik allgemein bekannt. Auch die Steuereinrichtung 2 ermittelt somit in fehlersicherer Weise die entsprechende, vom ausgeübten Druck p abhängige Reaktion und führt sie in fehlersicherer Weise aus.

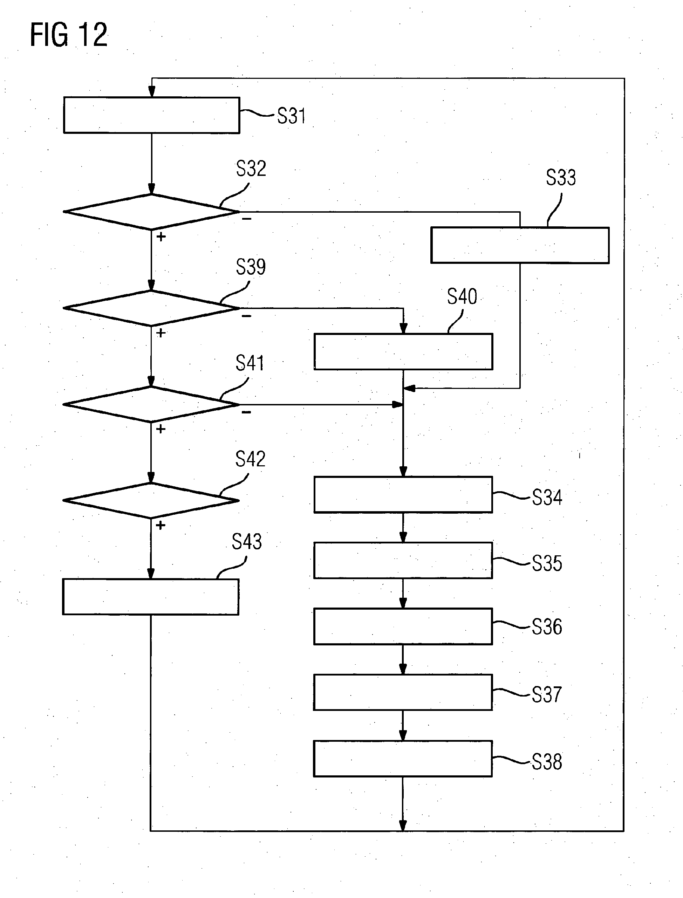

Die obenstehend erläuterten Betriebsweisen können noch weiter ausgestaltet werden. Beispielsweise ist es möglich, die Auswertungseinrichtung 9 so zu betreiben, wie dies nachfolgend in Verbindung mit FIG 12 näher erläutert wird.

Im Falle der Ausgestaltung gemäß FIG 12 befindet sich die Auswertungseinrichtung 9 entweder in einem Normalbetrieb oder in einem Sonderbetrieb. Im Normalbetrieb nimmt die Auswertungseinrichtung 9 in einem Schritt S31 den vom ausgeübten Druck p abhängigen Wert w entgegen. In einem Schritt S32 prüft sie, ob der ausgeübte Druck p von 0 verschieden ist, ob also überhaupt ein Druck p ausgeübt wird. Wenn der Druck p von 0 verschieden ist, setzt die Auswertungseinrichtung 9 einen Timer 14 (siehe FIG 3) zurück. Der Timer 14 ist Bestandteil der Bedienerschnittstelle 4.

Weiterhin ermittelt die Auswertungseinrichtung 9 in einem Schritt S34 die von dem ausgeübten Druck p abhängige Größe g. Die Größe g gibt die Auswertungseinrichtung 9 in einem Schritt S35 an die Steuereinrichtung 2 aus.

Falls die Steuereinrichtung 2 die Rückmeldung R generiert, nimmt die Auswertungseinrichtung 9 die Rückmeldung R in einem

Schritt S36 entgegen. In einem Schritt S37 ermittelt sie in diesem Fall die zugehörige Ansteuerung des Aktuators 13 und steuert den Aktuator 13 in einem Schritt S38 entsprechend der ermittelten Ansteuerung an.

Falls im Schritt S32 erkannt wurde, dass der Druck p 0 ist, geht die Auswertungseinrichtung 9 zu einem Schritt S39 über. Im Schritt S39 prüft die Auswertungseinrichtung 9, ob der Timer 14 bereits läuft. Wenn dies nicht der Fall ist, geht die Auswertungseinrichtung 9 zu einem Schritt S40 über, in dem sie den Timer 14 startet. Sodann geht sie zum Schritt S34 über.

Der Timer 14 weist eine vorbestimmte Ablaufzeit T auf. Die Ablaufzeit T kann nach Bedarf bestimmt sein. Beispielsweise kann sie (irgendwo) zwischen 20 s und 5 min liegen. Wenn der Timer 14 bereits läuft, prüft die Auswertungseinrichtung 9 in einem Schritt S41, ob der Timer 14 abgelaufen ist, also die Ablaufzeit T erreicht hat. Wenn dies nicht der Fall ist, geht die Auswertungseinrichtung 9 zum Schritt S34 über.

Soweit bisher erläutert, entspricht die Vorgehensweise von FIG 12 dem Normalbetrieb der Auswertungseinrichtung 9 und im Ergebnis daher auch der industriellen technischen Einrichtung 1. Wenn jedoch die Prüfung des Schrittes S41 positiv verläuft, der Timer 14 also abgelaufen ist, wurde bis zum Erreichen der Ablaufzeit T auf keinen Bereich 6 des Touchscreens 5 ein Druck p ausgeübt. In diesem Fall geht die Auswertungseinrichtung 9 zu einem Schritt S42 über. Der Schritt S42 entspricht einem Sonderbetrieb der Auswertungseinrichtung 9 und damit im Ergebnis auch der industriellen technischen Einrichtung 1.

Im Sonderbetrieb ignoriert die Auswertungseinrichtung 9, ob auf einen Bereich 6 des Touchscreens 5 ein Druck p ausgeübt wird. Hierbei ist unbeachtlich, auf welchen Bereich 6 des Touchscreens 5 gegebenenfalls ein Druck p ausgeübt wird. Die Auswertungseinrichtung 9 nimmt also zwar eventuell den druckabhängigen Wert w entgegen. Sie übermittelt aber nicht die entsprechende Größe g an die Steuereinrichtung 2. Die Steuereinrichtung 2 ermittelt daher auch nicht die entsprechende Reaktion, die im Normalbetrieb ermittelt werden würde. Auch führt die Steuereinrichtung 2 diese Reaktion - selbstverständlich - nicht aus.

Der Sonderbetrieb muss wieder verlassen werden können. Die Auswertungseinrichtung 9 prüft daher im Rahmen des Schrittes S42, ob ihr vom Bediener 3 ein Umschaltbefehl vorgegeben wird. Wird der Umschaltbefehl vorgegeben, setzt die Auswertungseinrichtung 9 in einem Schritt S43 den Timer 14 zurück und geht sodann zum Schritt S31 und damit wieder in den Normalbetrieb über.

Der Umschaltbefehl ist eine Bedienhandlung des Bedieners 3, die eine von einer einmaligen Druckausübung auf einen einzelnen Bereich 6 des Touchscreens 5 verschiedene Bedienhandlung des Bedieners 3 ist. Beispielsweise ist eine der nachfolgenden Vorgehensweisen möglich:
- Reset von der Steuereinrichtung 2 aus.
- Drücken einer speziellen Resettaste der Bedienerschnittstelle 4.
- Ausschalten und Wiedereinschalten der Bedienerschnittstelle 4.
- Eingabe einer vorbestimmten Sequenz von Berührungen vorbestimmter Bereiche 6 des Touchscreens 5. Beispielsweise kann gefordert sein, zuerst zweimal einen ersten Bereich 6 des Touchscreens 5 zu berühren, dann dreimal einen zweiten Bereich 6 des Touchscreens 5 und schließlich zweimal einen dritten Bereich 6 des Touchscreens 5.

Auch andere Varianten sind denkbar.

Es ist möglich, die obenstehend in Verbindung mit FIG 12 erläuterte Vorgehensweise zu variieren. Zum einen ist es möglich, die Schritte S39 und S40 ersatzlos entfallen zu lassen. Dies ist möglich, wenn der Timer 14 permanent läuft, solange er die Ablaufzeit T nicht erreicht hat. Weiterhin ist es möglich, die in Verbindung mit FIG 12 erläuterte Vorgehensweise auf die Steuereinrichtung 2 zu übertragen. In diesem Fall muss der Schritt S31 von FIG 12 durch den Schritt S6 von FIG 7 ersetzt werden. Die Schritte S34 bis S38 müssen in diesem Fall durch die Schritte S7, S8 und gegebenenfalls S21 und S 22 von FIG 7 ersetzt werden.

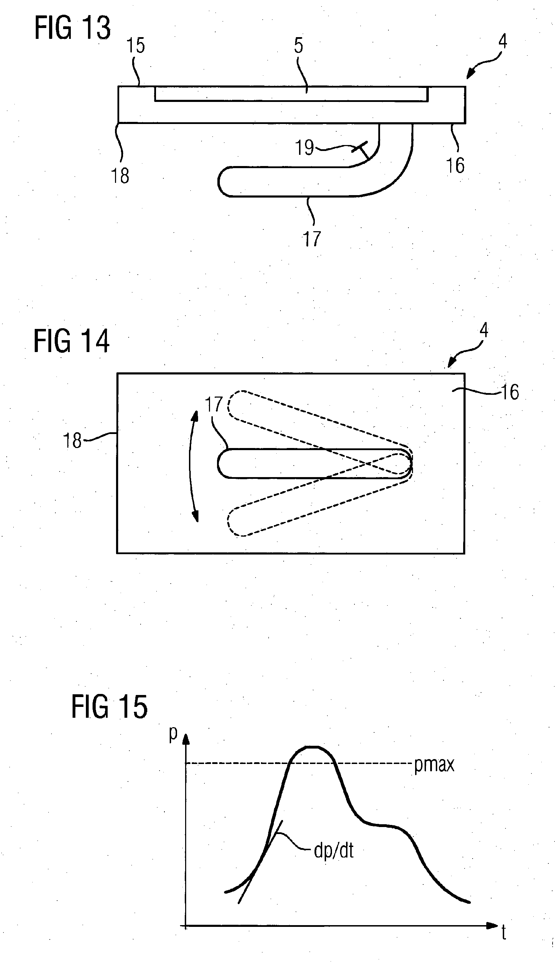

Die Bedienerschnittstelle 4 kann als fest eingebaute Bedienerschnittstelle 4 ausgebildet sein. Vorzugsweise ist die Bedienerschnittstelle 4 jedoch entsprechend der Darstellung von FIG 13 als mobile Bedienerschnittstelle 4 ausgebildet. Insbesondere kann in diesem Fall die Bedienerschnittstelle 4 einen Haltegriff 17 aufweisen. Der Touchscreen 5 ist auf einer Oberseite 15 der Bedienerschnittstelle 4 angeordnet. Der Haltegriff 17 kann an beliebiger Stelle angeordnet sein, beispielsweise auf der Unterseite 16 der Bedienerschnittstelle 4. Der Haltegriff 17 kann, wie aus FIG 14 ersichtlich ist, gegebenenfalls schwenkbar angeordnet sein. Die Bedienerschnittstelle 4 gemäß FIG 13 ist vorzugsweise derart dimensioniert, dass die in den FIG 13 und 14 mit 18 bezeichnete Kante der Bedienerschnittstelle 4 auf dem Unterarm des Bedieners 3 in der Nähe von dessen Armbeuge aufliegt, wenn der Bediener 3 die Bedienerschnittstelle 4 am Haltegriff 17 hält und auf seinen Unterarm auflegt.

Es ist möglich, dass der Haltegriff 17 eine rein mechanische Funktion hat. Vorzugsweise weist der Haltegriff 17 jedoch mindestens ein Betätigungselement 19 auf, beispielsweise einen Schalter oder - besonders bevorzugt - eine Taste oder eine Sensortaste. Das Betätigungselement 19 ist, falls es vorhanden ist, mit der Auswertungseinrichtung 9 verbunden. Ein Betätigen des Betätigungselements 19 wird in diesem Fall von der Auswertungseinrichtung 9 zusätzlich zum Ausüben von Druck p auf den Bereich 6 des Touchscreens 5 ausgewertet. Die möglichen Arten zur Auswertung sind vielfältiger Natur. Beispielsweise ist es möglich, mittels des Betätigungselements 19 ein Umschalten vom Sonder- in den Normalbetrieb (und gegebenenfalls auch umgekehrt) vorzunehmen. Alternativ ist es beispielsweise möglich, dass ein Ausüben von Druck p auf einen Bereich 6 des Touchscreens 5 nur dann als gültige Eingabe gewertet wird, wenn das Betätigungselement 19 betätigt ist. Alternativ ist es möglich, durch - gegebenenfalls wiederholtes - Betätigen des Betätigungselements 19 zwischen verschiedenen Masken des Touchscreens 5 umzuschalten. Auch ist es möglich, das Betätigungselement 19 ähnlich einer Totmanntaste zu verwenden. In diesem Fall muss die Taste 19 jeweils nach einigen Sekunden wieder gedrückt und losgelassen werden, anderenfalls erfolgt ein Abschalten der Bedienerschnittstelle 4 oder es wird ein Nothalt/Notaus der industriellen technischen Einrichtung 1 ausgelöst. Auch andere Vorgehensweisen und Kombinationen der obenstehend genannten Vorgehensweisen sind möglich.

Die datentechnische Verbindung zwischen den Schnittstellen 10, 11 der Auswertungseinrichtung 9 und der Steuereinrichtung 2 kann nach Bedarf ausgebildet sein. Vorzugsweise sind die Schnittstellen 10, 11 entsprechend der Darstellung in FIG 1 als leitungslose Schnittstellen ausgebildet. Insbesondere können sie als Funkverbindung ausgebildet sein.

Die vorliegende Erfindung weist viele Vorteile auf. Insbesondere ist auf relativ einfache Weise eine intuitive Bedienung der industriellen technischen Einrichtung 1 möglich. Weiterhin ist es - im Gegensatz zu einem mittels eines Touchscreens 5 realisierten Schiebereglers - nicht möglich, dass schlagartig auf einen maximalen einer Vielzahl von Sollwerten n* gesprungen wird. Denn aufgrund der Druckabhängigkeit müssen die Sollwerte n* in einer vorbestimmten Sequenz durchlaufen werden.

Die erfindungsgemäße, niveauaufgelöste Erfassung des Druckes p bietet auch noch weitergehende Auswertungsmöglichkeiten. Insbesondere ist es möglich, gemäß FIG 15 den ausgeübten Druck p als Funktion der Zeit t zu erfassen und beispielsweise die zeitliche Änderung dp/dt des Druckes p zu ermitteln und mit auszuwerten. Beispielsweise kann ermittelt werden, ob die zeitliche Ableitung dp/dt des Druckes p punktuell oder während eines relativ kurzen Minimalzeitraums einen maximal zulässigen Wert übersteigt. Wenn dies der Fall ist, kann dies als Panikreaktion gewertet werden, die einen Nothalt oder einen Notaus der industriellen technischen Einrichtung 1 auslöst. Die entsprechende Reaktion kann unabhängig davon ausgelöst werden, auf welchen Bereich 6 des Touchscreens 5 der entsprechende zeitliche Druckverlauf ausgeübt wird. Ebenso ist es möglich, einen Nothalt oder ein Notaus der industriellen technischen Einrichtung 1 auszulösen, wenn der ausgeübte Druck p einen maximal zulässigen Pegel pmax übersteigt.

Es ist möglich, einen Nothalt oder ein Notaus nur dann auszulösen, wenn beide Bedingungen (zu steiler Anstieg und Überschreiten des maximal zulässigen Druckpegels pmax) erfüllt sind. Vorzugsweise wird ein Notaus/Nothalt jedoch bereits dann ausgelöst, wenn nur eine der beiden Bedingungen erfüllt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Betriebsverfahren für eine industrielle technische Einrichtung (1),
- wobei von einem Bediener (3) der industriellen technischen Einrichtung (1) auf einen Bereich (6) eines Touchscreens (5) ein Druck (p) ausgeübt wird,
- wobei mittels einer dem Bereich (6) zugeordneten Sensoreinrichtung (8) ein von dem ausgeübten Druck (p) abhängiger Wert (w) generiert wird,
- wobei der von dem ausgeübten Druck (p) abhängige Wert (w) einer Auswertungseinrichtung (9) zugeführt wird,
- wobei in einem Normalbetrieb von der Auswertungseinrichtung (9) eine von dem ausgeübten Druck (p) abhängige Größe (g) an eine Steuereinrichtung (2) der industriellen technischen Einrichtung (1) übermittelt wird,
**dadurch gekennzeichnet,**
- **dass** die Steuereinrichtung (2) ein Element (12) der industriellen technischen Einrichtung (1) aktiviert und einen von dem ausgeübten Druck (p) abhängigen Sollwert (n*) an das Element (12) ausgibt, wenn der durch die an die Steuereinrichtung (2) übermittelte Größe (g) definierte Druck (p) einen ersten Schwellenwert übersteigt,
- **dass** der Sollwert (n*) eine monoton steigende Funktion des Druckes (p) ist und
- **dass** der Sollwert. (n*) den Wert Null aufweist, bis der Druck (p) einen zweiten, oberhalb des ersten Schwellenwertes liegenden Schwellenwert übersteigt.

2. Betriebsverfahren nach Anspruch 1,
**dadurch gekennzeichnet,**
**dass** der erste Schwellenwert oberhalb des minimal erfassbaren Druckes liegt.

3. Betriebsverfahren nach Anspruch 1 oder 2,
**dadurch gekennzeichnet,**
**dass** zwischen dem ersten und dem zweiten Schwellenwert mindestens ein weiteres, unterscheidbares Druckniveau liegt.

4. Betriebsverfahren nach Anspruch 1, 2 oder 3,
**dadurch gekennzeichnet, dass** der Sollwert (n*) ein Kraft-, Drehzahl- oder Geschwindigkeitssollwert ist.

5. Betriebsverfahren nach Anspruch 1, 2, 3 oder 4, **dadurch gekennzeichnet, dass** die Ableitung (dn*/dp) des Sollwertes (n*) nach dem Druck (p) eine monoton steigende Funktion ist.

6. Betriebsverfahren nach einem der Ansprüche 1 bis 5, **dadurch gekennzeichnet, dass** der Sollwert (n*) zusätzlich eine Funktion eines Zustandes (Z) der industriellen technischen Einrichtung (1) zum Zeitpunkt der Aktivierung des Elements (12) ist.

7. Betriebsverfahren nach einem der Ansprüche 1 bis 6, **dadurch gekennzeichnet, dass** mittels eines dem Bereich zugeordneten Aktuators (13) eine für den Sollwert (n*) spezifische taktile Ansteuerung des Bereichs (6) erfolgt.

8. Betriebsverfahren nach einem der obigen Ansprüche, **dadurch gekennzeichnet, dass** eine von dem ausgeübten Druck (p) abhängige Reaktion die Aktivierung einer Anzahl von Elementen (12) der industriellen technischen Einrichtung (1) umfasst und dass die Anzahl von aktivierten Elementen (12) eine monoton steigende Funktion des ausgeübten Druckes (p) ist.

9. Betriebsverfahren nach einem der obigen Ansprüche, **dadurch gekennzeichnet,**
- **dass** der von dem ausgeübten Druck (p) abhängige Wert (w) von der Sensoreinrichtung (8) auf fehlersichere Weise generiert wird,
- **dass** der von dem ausgeübten Druck (p) abhängige Wert der Auswertungseinrichtung (9) auf fehlersichere Weise zugeführt wird,
- **dass** die von dem ausgeübten Druck (p) abhängige Größe (g) von der Auswertungseinrichtung (9) auf fehlersichere Weise ermittelt und an die Steuereinrichtung (2) übermittelt wird und
- **dass** die von dem ausgeübten Druck (p) abhängige Reaktion von der Steuereinrichtung (2) auf fehlersichere Weise ermittelt und ausgeführt wird.

10. Betriebsverfahren nach einem der obigen Ansprüche, **dadurch gekennzeichnet,**
- **dass** durch das Beenden der Druckausübung ein Timer (14) gestartet wird, der eine vorbestimmte Ablaufzeit (T) aufweist,
- **dass** in dem Fall, dass von dem Bediener (3) vor Erreichen der Ablaufzeit (T) auf den Bereich (6) des Touchscreens (5) oder auf einen anderen Bereich (6) des Touchscreens (5) erneut ein Druck (p) ausgeübt wird, der Timer (14) zurückgesetzt wird,
- **dass** in dem Fall, dass von dem Bediener (3) bis zum Erreichen der Ablaufzeit (T) weder auf den Bereich (6) des Touchscreens (5) noch auf einen anderen Bereich (6) des Touchscreens (5) erneut ein Druck (p) ausgeübt wird, in einen Sonderbetrieb übergegangen wird und
- **dass** in dem Fall, dass von dem Bediener (3) im Sonderbetrieb auf den Bereich (6) des Touchscreens (5) oder auf einen anderen Bereich (6) des Touchscreens (5) erneut ein Druck (p) ausgeübt wird, von der Steuereinrichtung (2) nicht die Reaktion des Normalbetriebs ermittelt und ausgeführt wird.

11. Betriebsverfahren nach Anspruch 10,
**dadurch gekennzeichnet, dass** im Sonderbetrieb geprüft wird, ob der Bediener (3) einen Umschaltbefehl vorgibt, dass der Umschaltbefehl eine von einer einmaligen Druckausübung auf einen einzelnen Bereich (6) des Touchscreens (5) verschiedene Bedienhandlung des Bedieners (3) ist und dass bei Vorgabe des Umschaltbefehls vom Sonderbetrieb in den Normalbetrieb übergegangen wird.

12. Industrielle technische Einrichtung,
- wobei die industrielle technische Einrichtung eine Bedienerschnittstelle (4) und eine Steuereinrichtung (2) aufweist,
- wobei die Bedienerschnittstelle einen Touchscreen (5) aufweist, der mindestens einen Bereich (6) aufweist, auf den von einem Bediener (3) der industriellen technischen Einrichtung ein Druck (p) ausgeübt wird,
- wobei dem Bereich (6) eine Sensoreinrichtung (8) zugeordnet ist, mittels derer ein von dem ausgeübten Druck (p) abhängiger Wert (w) generiert wird,
- wobei die Bedienerschnittstelle eine Auswertungseinrichtung (9) aufweist, mit der die Sensoreinrichtung (8) zur Übermittlung des von dem ausgeübten Druck (p) abhängigen Wertes (w) verbunden ist,
- wobei die Auswertungseinrichtung (9) eine Schnittstelle (10) zur Steuereinrichtung (2) aufweist, über die eine von dem ausgeübten Druck (p) abhängige Größe (g) an die Steuereinrichtung (2) übermittelt wird,
**dadurch gekennzeichnet,**
- **dass** die Steuereinrichtung (2) eine Schnittstelle (11) zur Auswertungseinrichtung (9) zum entgegen Nehmen der ihr von der Auswertungseinrichtung (9) übermittelten von dem ausgeübten Druck (p) abhängigen Größe (g) aufweist,
- **dass** die Steuereinrichtung (2) ein Element (12) der industriellen technischen Einrichtung (1) aktiviert und einen von dem ausgeübten Druck (p) abhängigen Sollwert (n*) an das Element (12) ausgibt, wenn der durch die an die Steuereinrichtung (2) übermittelte Größe (g) definierte Druck (p) einen ersten Schwellenwert übersteigt,
- **dass** der Sollwert (n*) eine monoton steigende Funktion des Druckes (p) ist und
- **dass** der Sollwert (n*) den Wert Null aufweist, bis der Druck (p) einen zweiten, oberhalb des ersten Schwellenwertes liegenden Schwellenwert übersteigt.

13. Einrichtung nach Anspruch 12,
**dadurch gekennzeichnet, dass** sie derart ausgebildet ist, dass sie im Betrieb ein Betriebsverfahren nach einem der Ansprüche 2 bis 11 ausführt.

14. Einrichtung nach Anspruch 12 oder 13,
**dadurch gekennzeichnet, dass** sie als mobile Bedienerschnittstelle ausgebildet ist.

15. Einrichtung nach Anspruch 14,
**dadurch gekennzeichnet, dass** die Bedienerschnittstelle einen Haltegriff (17) aufweist.

16. Einrichtung nach Anspruch 15,
**dadurch gekennzeichnet, dass** der Touchscreen (5) auf einer Oberseite (15) der Bedienerschnittstelle angeordnet ist und dass der Haltegriff (17) an der Unterseite (16) der Bedienerschnittstelle angeordnet ist.

17. Einrichtung nach Anspruch 15 oder 16, **dadurch gekennzeichnet, dass** der Haltegriff (17) mindestens ein Betätigungselement (19) aufweist, dass das Betätigungselement (19) mit der Auswertungseinrichtung (9) signaltechnisch verbunden ist und dass das Betätigen des Betätigungselements (19) von der Auswertungseinrichtung (9) zusätzlich zum Ausüben von Druck (p) auf den Bereich (6) des Touchscreens (5) ausgewertet wird.

18. Einrichtung nach Anspruch 15, 16 oder 17,
**dadurch gekennzeichnet, dass** die Schnittstelle (10) zur Steuereinrichtung (2) der industriellen technischen Einrichtung (1) als leitungslose Schnittstelle (10) ausgebildet ist.

## Claims

1. Method of operation for an industrial technical device (1),
- wherein a pressure (p) is exerted on an area (6) of a touchscreen (5) by an operator (3) of the industrial technical device (1),
- wherein a value (w) dependent on the exerted pressure (p) is generated by means of a sensor device (8) assigned to the area (6),
- wherein the value (w) dependent on the exerted pressure (p) is supplied to an evaluation device (9),
- wherein, in a normal mode, a variable (g) dependent on the exerted pressure (p) is transferred by the evaluation device (9) to a control device (2) of the industrial technical device (1), **characterized in that**
- the control device (2) activates an element (12) of the industrial technical device (1) and outputs a setpoint value (n*) dependent on the exerted pressure (p) to the element (12) if the pressure (p) defined by the variable (g) transferred to the control device (2) exceeds a first threshold value,
- the setpoint value (n*) is a monotonously increasing function of the pressure (p) and
- the setpoint value (n*) has the value zero until the pressure (p) increases beyond a second threshold value lying above the first threshold value.

2. Method of operation according to claim 1, **characterised in that**
the first threshold value lies above the minimum pressure able to be detected.

3. Method of operation according to claim 1 or 2, **characterised in that**
at least one further, distinguishable pressure level lies between the first and the second threshold value.

4. Method of operation according to claim 1, 2 or 3, **characterised in that** the threshold value (n*) is a force, rotational speed or velocity setpoint value.

5. Method of operation according to claim 1, 2, 3 or 4, **characterised in that** the derivation (dn*/dp) of the setpoint value (n*) according to the pressure (p) is a monotonously increasing function.

6. Method of operation according to one of claims 1 to 5, **characterised in that** the setpoint value (n*) is additionally a function of a state (Z) of the industrial technical device (1) at the time at which the element (12) is activated.

7. Method of operation according to one of claims 1 to 6, **characterised in that**, by means of an actuator (13) assigned to the area a specific tactile controlling of the area (6) is undertaken for the setpoint value (n*).

8. Method of operation according to one of the above claims, **characterised in that** a reaction dependent on the exerted pressure (p) includes the activation of a number of elements (12) of the industrial technical device (1) and that the number of activated elements (12) is a monotonously increasing function of the exerted pressure (p).

9. Method of operation according to one of the above claims, **characterised in that**
- the value (w) dependent on the exerted pressure (p) is generated by the sensor device (8) in a failsafe manner,
- the value dependent on the exerted pressure (p) is supplied to the evaluation device (9) in a failsafe manner,
- the value (w) dependent on the exerted pressure (p) is determined by the evaluation device (9) in a failsafe manner and is transferred to the control device (2) and
- the reaction dependent on the exerted pressure (p) is determined and carried out by the control device (2) in a failsafe manner.

10. Method of operation according to one of the above claims, **characterised in that**
- a timer (14) is started by the ending of the pressure exertion which has a pre-specified expiry time (T),
- in the event of the operator (3) exerting renewed pressure (p) on the area (6) of the touchscreen (5) or on another area (6) of the touchscreen (5) before the expiry time (T) is reached, the timer (14) is reset,
- in the event of the operator (3) not exerting pressure (p) again either on the area (6) of the touchscreen (5) or on another area (6) of the touchscreen (5) before the expiry time (T) is reached, there is a transition to a special mode and
- in the event of the operator (3) exerting renewed pressure (p) on the area (6) of the touchscreen (5) or on another area (6) of the touchscreen (5) in the special mode, the reaction of normal operation is not determined and carried out by the control device (2).

11. Method of operation according to claim 10, **characterised in that** a check is made in special mode as to whether the operator (3) is pre-specifying a switchover command, that the switchover command is an operating action by the operator (3) differing from a single exertion of pressure on a single area (6) of the touchscreen (5) and that when the switchover command is pre-specified there is a transition from special mode into normal mode.

12. An industrial technical device,
- wherein the industrial technical device has an operator interface (4) and a control device (2),
- wherein the operator interface features a touchscreen (5) having at least one area (6) on which a pressure (p) is exerted by an operator (3) of the industrial technical device,
- wherein a sensor device (8) is assigned to the area (6), by means of which a value (w) dependent on the exerted pressure (p) is generated,
- wherein the operator interface has an evaluation device (9) to which the sensor device (8) is connected for transfer of the value (w) dependent on the exerted pressure (p),
- wherein the evaluation device (9) has an interface (10) to the control device (2) via which a variable (g) dependent on the exerted pressure (p) is transferred to the control device (2), **characterised in that**
- the control device (2) has an interface (11) to the evaluation device (9) for accepting the variable (g) dependent on the exerted pressure (p) transmitted to it by the evaluation device (9),
- the control device (2) activates an element (12) of the industrial technical device (1) and outputs a setpoint value (n*) dependent on the exerted pressure (p) to the element (12) if the pressure (p) defined by the variable (g) transferred by it to the control device (2) exceeds a first threshold value,
- the setpoint value (n*) is a monotonously increasing function of the pressure (p) and
- the setpoint value (n*) has the value zero until the pressure (p) increases beyond a second threshold value lying above the first threshold value.

13. Device according to claim 12,
**characterised in that** it is embodied such that, when it is operating, it carries out a method of operation according to one of claims 2 to 11.

14. Device according to claim 12 or 13, **characterised in that** it is embodied as a mobile operator interface.

15. Device according to claim 14,
**characterised in that** the operator interface has a handle (17).

16. Device according to claim 15,
**characterised in that** the touchscreen (5) is disposed on an upper side (15) of the operator interface and that the handle (17) is disposed on the lower side (16) of the operator interface.

17. Device according to claim 15 or 16, **characterised in that** the handle (17) has at least one actuation element (19), that the actuation element (19) has a signalling connection to the evaluation device (9) and that the actuation of the actuation element (19) by the evaluation device (9) is evaluated in addition to the exertion of pressure (p) on the area (6) of the touchscreen (5).

18. Device according to claim 15, 16 or 17, **characterised in that** the interface (10) to the control device (2) of the industrial technical device (1) is embodied as a wireless interface (10).

## Revendications

1. Procédé pour faire fonctionner un équipement ( 1 ) technique industriel,
- dans lequel une pression ( p ) est appliquée par un opérateur ( 3 ) de l'équipement technique industriel sur une partie ( 6 ) d'un écran ( 5 ) tactile,
- dans lequel il est produit, au moyen d'un dispositif ( 8 ) formant capteur associé à la partie ( 6 ), une valeur ( w ) qui dépend de la pression ( p ) appliquée,
- dans lequel la valeur ( w ) qui dépend de la pression ( p ) appliquée est envoyée à un dispositif ( 9 ) d'exploitation,
- dans lequel, dans un fonctionnement normal, il est transmis, par le dispositif ( 9 ) d'exploitation au dispositif ( 2 ) de commande de l'équipement ( 1 ) technique industriel, une grandeur ( g ) qui dépend de la pression ( p ) appliquée, **caractérisé**
- **en ce que** le dispositif ( 2 ) de commande active un élément ( 12 ) de l'équipement ( 1 ) technique industriel et envoie à l'élément ( 12 ) une valeur ( n* ) de consigne qui dépend de la pression ( p ) appliquée, si la pression ( p ) définie par la grandeur ( g ) transmise au dispositif ( 2 ) de commande dépasse une première valeur de seuil,
- **en ce que** la valeur ( n* ) de consigne est une fonction croissante d'une manière monotone de la pression ( p ) et
- **en ce que** la valeur ( n* ) de consigne a la valeur zéro jusqu'à ce que la pression ( p ) dépasse une deuxième valeur de seuil se trouvant au-dessus de la première valeur de seuil.

2. Procédé suivant la revendication 1, **caractérisé en ce que** la première valeur de seuil se trouve au-dessus de la pression pouvant être détectée au minimum.

3. Procédé suivant la revendication 1 ou 2, **caractérisé en ce qu'**il y a au moins un autre niveau de pression pouvant être distingué entre la première et la deuxième valeurs de seuil.

4. Procédé suivant la revendication 1, 2 ou 3, **caractérisé en ce que** la valeur ( n* ) de consigne est une valeur de consigne de force, de nombre de tours ou de vitesse.

5. Procédé suivant la revendication 1, 2, 3 ou 4, **caractérisé en ce que** la dérivée ( dn*/dp ) de la valeur ( n* ) de consigne par rapport à la pression ( p ) est une fonction croissante d'une manière monotone.

6. Procédé suivant l'une des revendications 1 à 5, **caractérisé en ce que** la valeur ( n* ) de consigne est en plus une fonction de l'état ( Z ) de l'équipement ( 1 ) technique industriel à l'instant de l'activation de l'élément ( 12 ).

7. Procédé suivant l'une des revendications 1 à 6, **caractérisé en ce qu'**une excitation tactile, spécifique à la valeur ( n* ) de consigne, de la partie ( 6 ) s'effectue au moyen d'un actionneur ( 13 ) associé à la partie.

8. Procédé suivant l'une des revendications précédentes, **caractérisé en ce qu'**une réaction qui dépend de la pression ( p ) appliquée comprend l'activation d'un certain nombre d'éléments ( 12 ) de l'équipement ( 1 ) technique industriel et **en ce que** le nombre d'éléments ( 12 ) activés est une fonction croissante de manière monotone de la pression ( p ) appliquée.

9. Procédé suivant l'une des revendications précédentes, **caractérisé**
- **en ce que** la valeur ( w ) qui dépend de la pression ( p ) appliquée est produite d'une manière sécurisée vis à vis d'une erreur par le dispositif ( 8 ) capteur,
- **en ce que** la valeur qui dépend de la pression ( p ) appliquée est envoyée d'une manière sécurisée vis à vis d'une erreur au dispositif ( 9 ) d'exploitation,
- **en ce que** la grandeur ( g ) qui dépend de la pression ( p ) appliquée est déterminée d'une manière sécurisée vis à vis d'une erreur par le dispositif ( 9 ) d'exploitation et est transmise au dispositif ( 2 ) de commande et
- **en ce que** la réaction qui dépend de la pression ( p ) appliquée est déterminée d'une manière sécurisée vis à vis d'une erreur par le dispositif ( 2 ) de commande et est réalisée.

10. Procédé suivant l'une des revendications précédentes, **caractérisé**
- **en ce que** la fin de l'application d'une pression fait débuter une minuterie ( 14 ) qui a un temps ( T ) d'écoulement défini à l'avance,
- **en ce que** dans le cas où il est appliqué par l'opérateur ( 3 ) avant l'expiration du temps ( T ) d'écoulement sur la partie ( 6 ) de l'écran ( 5 ) tactile ou sur une autre partie ( 6 ) de l'écran ( 5 ) tactile à nouveau une pression ( p ), la minuterie ( 14 ) est remise à l'état initial,
- **en ce que** dans le cas où il n'est appliqué par l'opérateur ( 3 ) jusqu'à ce que le temps ( T ) d'écoulement soit atteint, à nouveau une pression ( p ) ni sur la partie ( 6 ) de l'écran ( 5 ) tactile, ni sur une autre partie ( 6 ) de l'écran ( 5 ) tactile, on passe dans un fonctionnement particulier, et
- **en ce que** dans le cas où il est appliqué par l'opérateur ( 3 ) dans le fonctionnement particulier sur la partie ( 6 ) de l'écran ( 5 ) tactile ou sur une autre partie ( 6 ) de l'écran ( 5 ) tactile à nouveau une pression ( p ), la réaction du fonctionnement normal n'est pas déterminée par le dispositif ( 2 ) de commande et n'est pas réalisée.

11. Procédé suivant la revendication 10, **caractérisé en ce que** l'on contrôle dans le fonctionnement particulier si l'opérateur ( 3 ) prescrit une instruction de commutation, **en ce que** l'instruction de commutation est une manipulation de l'opérateur ( 3 ) différente de l'application une seule fois d'une pression sur une partie ( 6 ) individuelle de l'écran ( 5 ) tactile et **en ce que**, s'il y a prescription de l'instruction de commutation, on passe du fonctionnement particulier au fonctionnement normal.

12. Equipement technique industriel,
- dans lequel l'équipement technique industriel a une interface ( 4 ) d'opérateur et un dispositif ( 2 ) de commande,
- dans lequel l'interface d'opérateur a un écran ( 5 ) tactile qui a au moins une partie ( 6 ) sur laquelle une pression ( p ) peut être appliquée par un opérateur ( 3 ) de l'équipement technique industriel,
- dans lequel il est associé à la partie ( 6 ) un dispositif ( 8 ) capteur au moyen duquel une valeur ( w ) qui dépend de la pression ( p ) appliquée est produite,
- dans lequel l'interface d'opérateur a un dispositif ( 9 ) d'exploitation auquel le dispositif ( 6 ) capteur est relié pour la transmission de la valeur ( w ) qui dépend de la pression ( p ) appliquée,
- dans lequel le dispositif ( 9 ) d'exploitation a une interface ( 10 ) avec le dispositif ( 2 ) de commande par laquelle une grandeur ( g ) qui dépend de la pression ( p ) appliquée est transmise au dispositif ( 2 ) de commande, **caractérisé en ce que**
- le dispositif ( 2 ) de commande a une interface ( 11 ) avec le dispositif ( 9 ) d'exploitation pour la réception de la grandeur ( g ) qui dépend de la pression ( p ) appliquée et qui lui est transmise par le dispositif ( 9 ) d'exploitation,
- **en ce que** le dispositif ( 2 ) de commande active un élément ( 12 ) de l'équipement ( 1 ) technique industriel et envoie à l'élément ( 12 ) une valeur ( n* ) de consigne qui dépend de la pression ( p ) appliquée, si la pression ( p ) définie par la grandeur ( g ) transmise au dispositif ( 2 ) de commande dépasse une première valeur de seuil
- **en ce que** la valeur ( n* ) de consigne est une fonction croissant d'une manière monotone de la pression ( p ) et
- **en ce que** la valeur ( n* ) de consigne a la valeur zéro, jusqu'à ce que la pression ( p ) dépasse une deuxième valeur de seuil se trouvant au-dessus de la première valeur de seuil.

13. Equipement suivant la revendication 12, **caractérisé en ce qu'**il est constitué pour exécuter en fonctionnement un procédé de fonctionnement selon l'une des revendications 2 à 11.

14. Equipement suivant la revendication 12 ou 13, **caractérisé en ce qu'**il est constitué sous la forme d'une interface d'opérateur mobile.

15. Equipement suivant la revendication 14, **caractérisé en ce que** l'interface d'opérateur a une poignée ( 17 ).

16. Equipement suivant la revendication 15, **caractérisé en ce que** l'écran ( 5 ) tactile est disposé sur un côté ( 15 ) supérieur de l'interface d'opérateur et **en ce que** la poignée
( 17 ) est disposée sur le côté ( 16 ) inférieur de l'interface d'opérateur.

17. Equipement suivant la revendication 15 ou 16, **caractérisé en ce que** la poignée ( 17 ) a au moins un élément ( 19 ) d'actionnement, **en ce que** l'élément ( 19 ) d'actionnement est relié en technique du signal au dispositif ( 9 ) d'exploitation et **en ce que** l'actionnement de l'élément ( 19 ) d'actionnement par le dispositif ( 9 ) d'exploitation est exploité en plus de l'application de la pression ( p ) sur la partie ( 16 ) de l'écran ( 5 ) tactile.

18. Equipement suivant la revendication 15, 16 ou 17 **caractérisé en ce que** l'interface ( 10 ) avec le dispositif ( 2 ) de commande de l'équipement ( 1 ) technique industriel est constitué sous la forme d'une interface ( 10 ) sans ligne.
